# FASCICULE DE BREVET EUROPEEN

(11) **EP 1 345 487 B1**
(45) Date de publication et mention de la délivrance du brevet: **20.07.2005**
(21) Numéro de dépôt: 01969858.8
(22) Date de dépôt: 07.09.2001
(51) Int. Cl.: A01B 49/06

(54) **DECHAUMEUSE DE PRECISION A ELEMENTS SEMEURS INCORPORES**
PRÄZISIONSSCHÄLPFLUG MIT EINGEBAUTEN SÄHELEMENTEN
PRECISION DISC TILLER WITH INCORPORATED SOWING ELEMENTS

(30) Priorité: 08.09.2000 FR 0011454
(43) Date de publication de la demande: 24.09.2003
(73) Titulaire: Evin, Michel, 44850 Ligne (FR)
(72) Inventeur: Evin, Michel, 44850 Ligne (FR)
(74) Mandataire: Fosse, Danièle
(86) Numéro de dépôt international: PCT/FR2001/002785
(87) Numéro de publication internationale: WO 2002/019792

(56) Documents cités:
- EP-A- 0 540 995
- EP-A- 0 891 691
- FR-A- 2 630 286
- GB-A- 1 150 723
- US-A- 4 152 993

## Description

La présente invention concerne une déchaumeuse, dite de précision, du type comprenant un châssis porté ou tracté équipé d'outils aratoires constitués d'au moins un train avant de disques déchaumeurs rotatifs non moteurs, ces disques travaillant dans le sol suivant un terrage réglable par l'intermédiaire d'au moins un organe de référence tel que patin, roue ou rouleau couplé audit châssis, chaque disque déchaumeur ou le train avant de disques déchaumeurs étant monté indépendant et oscillant par rapport au châssis porteur de la déchaumeuse de manière à céder sous une pression prédéterminée réglable et obtenir un travail de la terre à profondeur constante des disques déchaumeurs, des éléments semeurs ainsi qu'un dispositif d'enfouissement des graines distribuées par les éléments semeurs, ledit dispositif d'enfouissement étant monté sur le châssis en aval desdits éléments semeurs.

Le déchaumage est une opération qui consiste à mélanger la terre et la paille à faible profondeur. L'intérêt d'une telle opération est d'éviter le retournement du sol qui amène à des nuisances bien connues à ceux versés dans l'art du travail du sol. Toutefois, si l'opération de déchaumage est réalisée seule, elle s'avère peu rentable. Par ailleurs, on est aujourd'hui à la recherche d'engins susceptibles d'implanter des semis dans un sol recouvert de résidus de culture. Pour permettre une telle implantation dans des conditions optimales, il est nécessaire de travailler le sol à une faible profondeur, cette profondeur étant constante. Les engins connus à ce jour ne permettent pas de mettre en oeuvre ces nouvelles techniques de semis.

Ainsi, le brevet GB-A-1.150.723 décrit un châssis équipé d'un coutre formé par un disque rotatif apte à découper une fente dans le sol pour former un sillon, ce sillon étant élargi au moyen de deux disques rotatifs divergents disposés de manière à être maintenus en contact au moyen d'organes élastiques appropriés. Les éléments semeurs sont disposés dans l'intervalle formé par les disques d'élargissement du sillon pour déposer la graine dans le fond du sillon après coopération des disques avec l'élément semeur de telle sorte que la graine est déposée sur un sol dur non ameubli non travaillé. Le sillon est ensuite refermé au moyen d'un rouleau. Une telle conception oblige à la création d'un sillon de profondeur plus ou moins constante qui entraîne une désorganisation du sol. Par ailleurs, il est ensuite nécessaire d'une part d'élargir le sillon, d'autre part de le refermer, ces opérations entraînant à chaque fois des imprécisions de telle sorte que la profondeur de semis ne peut être garantie. En outre, il est nécessaire, dans le cas de cette technique, de semer à une profondeur relativement importante pour garantir un enfouissement de la graine, enfouissement dû à la terre formée par les rives du sillon.

Le brevet EP-A-0.540.995 décrit un engin mettant en oeuvre une technique analogue. Dans ce cas, le châssis est équipé de disques crénelés 10 munis chacun d'un disque plombeur 30 qui détermine la profondeur de pénétration. Un coutre 24 recevant les graines est disposé le long d'une des faces du disque 10. Ce coutre creuse un sillon 31 qui est ensuite recouvert au moyen d'un disque 13 dont la profondeur peut être réglée au moyen d'un dispositif de précontrainte élastique. A nouveau, il est nécessaire de procéder à la réalisation d'un sillon qui devra ultérieurement être refermé. En outre, les dispositifs de réglage de la profondeur sont individualisés et engendrent un surcoût important de l'ensemble.

Le document US-A-4.152.993 décrit un engin dans lequel le train avant est motorisé et constitué d'une pluralité de lames 9A constituant des organes de travail du sol. Une telle motorisation ne permet pas de travailler à des vitesses élevées.

Un but de la présente invention est de proposer un engin susceptible d'effectuer en un seul passage, à des vitesses élevées de l'ordre de 10 - 15 km/h, à la fois une opération de déchaumage et de semis, la conception de l'engin autorisant un déchaumage précis pour permettre un semis à une profondeur déterminée sensiblement constante sur une largeur de travail.

A cet effet, l'invention a pour objet une déchaumeuse de précision telle que revendiquée.

Grâce au montage oscillant et indépendant de chaque disque déchaumeur des trains avant et arrière sur le châssis et à la présence d'au moins un organe de réglage de terrage commun aux trains avant et arrière, le déchaumage s'effectue avec précision à une profondeur déterminée sensiblement constante sur une largeur de travail, de sorte que le semis peut également s'opérer dans de bonnes conditions puisque ce sont les outils aratoires de déchaumage qui déterminent la profondeur de semis des graines. On obtient en conséquence un semis dans lequel des graines sont déposées sur un lit de terre d'épaisseur sensiblement constante formé par le train avant de disques, ces graines étant ensuite recouvertes d'un lit de terre d'épaisseur sensiblement constante formé par le train arrière de disques. Il en résulte la garantie que les couches inférieure et supérieure du semis sont d'épaisseur suffisante pour permettre une croissance favorable des graines malgré une faible profondeur de semis et ce au moyen d'une construction extrêmement simple sans avoir à recourir à la formation de sillons. En outre, la conception de la déchaumeuse permet de garantir un tel résultat y compris en cas d'obstacles tels que pierres ou autres.

Selon une forme de réalisation préférée de l'invention, chaque disque déchaumeur du ou des trains de disque est un disque concave de grand diamètre, le diamètre étant de préférence supérieur à 40 cm.

Le choix de disques rotatifs permet d'éviter d'observer un effet "râteau", c'est-à-dire un ramassage intempestif des déchets qui s'accumulent contre les outils, cet effet "râteau" étant en particulier observé lorsqu'on est en présence de dents.

La concavité des disques déchaumeurs autorise quant à elle une projection latérale et arrière d'un flux de terre qui permet d'une part, à partir du train avant de disques, la formation d'un lit de terre sur lequel la graine sera déposée, d'autre part, à partir du train arrière, un recouvrement des graines semées. Cette projection s'effectue dans de bonnes conditions grâce au grand diamètre des disques qui permet à ces derniers de ne pas être gênés par les débris au sol.

L'invention sera bien comprise à la lecture de la description suivante d'un exemple de réalisation, en référence aux dessins annexés dans lesquels :

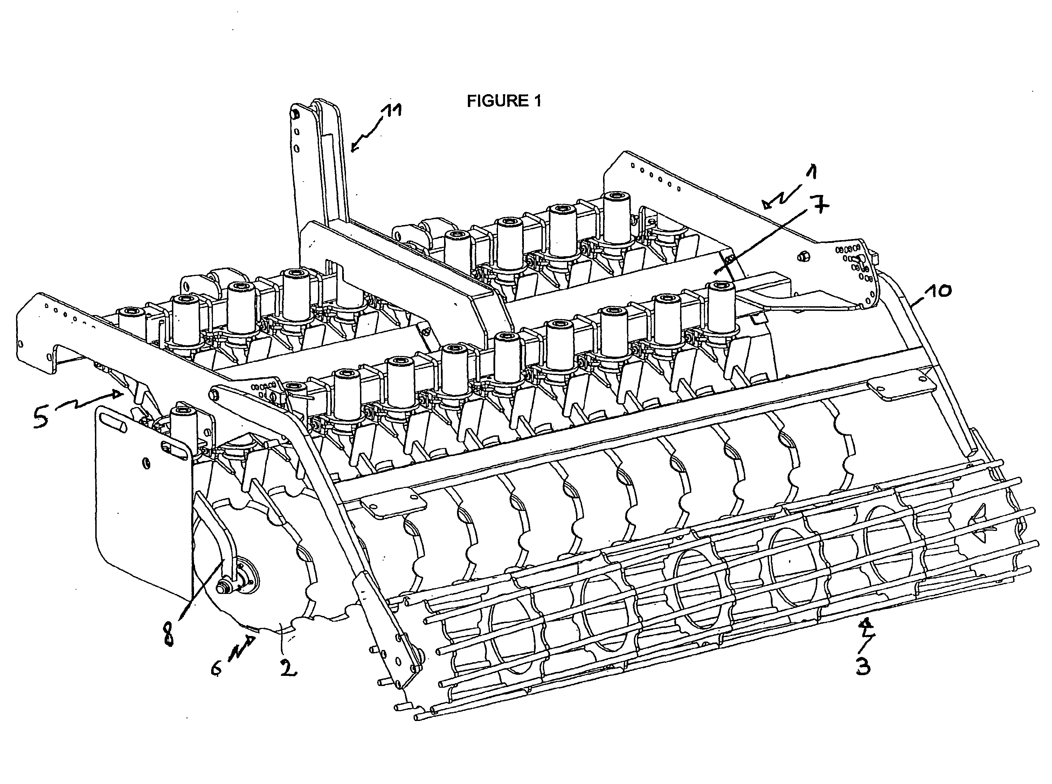

la figure 1 représente une vue partielle en perspective d'une déchaumeuse conforme à l'invention;

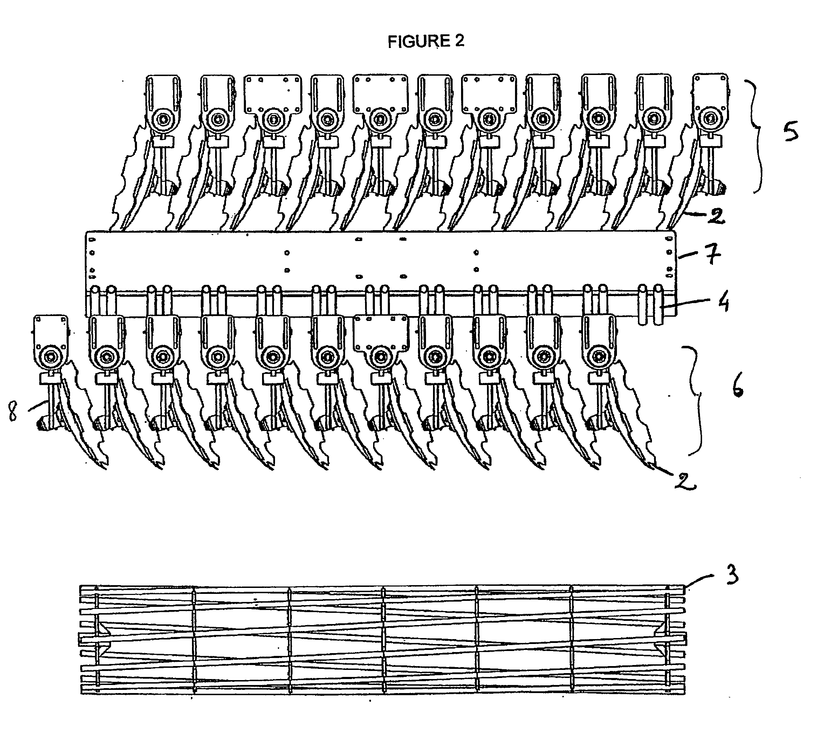

la figure 2 représente une vue partielle de dessus de la déchaumeuse de la figure 1;
la figure 3 représente une vue partielle en perspective de l'agencement respectif des disques de trains avant et arrière;

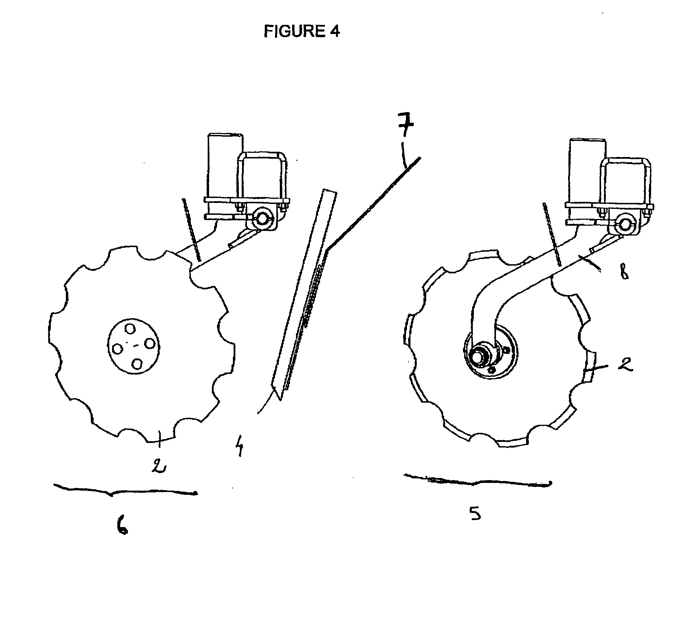

la figure 4 représente une vue schématique partielle des éléments principaux de la déchaumeuse et
la figure 5 représente une vue schématique partielle d'un disque lors de son passage d'une position travail à une position escamotée.

La déchaumeuse de précision, objet de l'invention, comprend un châssis 1 porté ou tracté équipé d'outils aratoires. Le châssis 1 peut affecter un grand nombre de formes. Dans l'exemple représenté, ce châssis 1 est constitué d'un cadre formé de deux longerons reliés entre eux par des traverses constituées de poutres équipées des outils aratoires. Ces poutres s'étendent sensiblement perpendiculairement à la ligne de traction du châssis 1. Ce châssis est en outre équipé d'un dispositif 11 d'attelage à un véhicule tracteur. L'attelage sera de préférence de type trois points.

Les outils aratoires sont constitués d'au moins un train 5 avant et d'un train 6 arrière de disques 2 déchaumeurs rotatifs non moteurs. Ces trains 5 et 6 de disques 2 s'étendent donc le long d'une largeur de travail, c'est-à-dire le long d'une ligne perpendiculaire à la ligne de traction dudit châssis 1. Il est à noter que, par disques 2 déchaumeurs non moteurs, on entend des disques 2 déchaumeurs dont l'entraînement en rotation est provoqué sous l'effet de la force de friction avec le sol, force générée par le déplacement du châssis 1 tracté.

Ces disques 2 des trains 5 avant et du train 6 arrière travaillent dans le sol suivant un terrage ou une profondeur réglable par l'intermédiaire d'au moins un organe 3 de référence constituté d'un rouleau, couplé audit châssis 1 et commun auxdits trains. Il en résulte une simplification de la déchaumeuse. Indépendamment de sa réalisation, en tout état de cause, cet organe de référence sera commun à au moins trois disques 2 déchaumeurs du train avant ou respectivement du train arrière, de préférence au moins cinq disques 2 déchaumeurs d'un train de disques 2 pour garantir un réglage de terrage adéquat.

Cet organe 3 de référence est de préférence constitué par un organe rotatif positionné à l'arrière du châssis 1. Dans les exemples représentés, l'organe 3 de réglage de terrage est constitué par un rouleau cage commun à l'ensemble des disques 2 déchaumeurs du train 5 avant et du train 6 arrière. Ce rouleau cage 3 est couplé au châssis 1 par l'intermédiaire de deux bras 10 s'étendant à l'arrière du cadre formant châssis 1, lesdits bras 10 étant réglables en position sur le châssis 1. Ce réglage de terrage s'effectue par coopération de cet organe de référence 3 avec le dispositif d'attelage 11.

Les outils aratoires, constitués par les disques 2 déchaumeurs rotatifs non moteurs, sont réalisés de manière telle que chaque disque déchaumeur ou groupe de disques déchaumeurs du train 5 avant ou du train 6 arrière est monté indépendant et oscillant par rapport au châssis 1 porteur de la déchaumeuse de manière à s'escamoter sous une pression prédéterminée réglable et obtenir ainsi un travail de la terre à profondeur constante des disques 2 déchaumeurs. Dans les exemples représentés, chaque disque 2 déchaumeur des trains 5, 6 de disques est un disque concave de grand diamètre, le diamètre étant au moins égal à 40 cm et de préférence supérieur à 45 cm. Chaque disque 2 déchaumeur comporte un angle α d'entrure positif compris dans la plage [3 - 20] degrés et un angle β d'ouverture positif compris dans la plage [10 - 30] degrés. Chaque disque 2 déchaumeur est encore de préférence crénelé à sa périphérie.

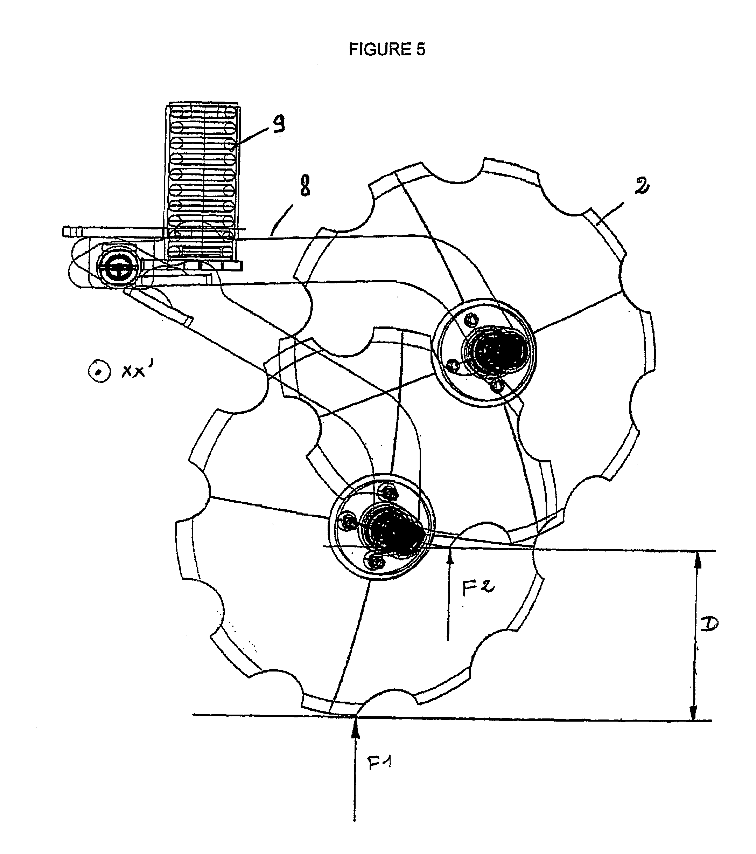

Pour permettre un montage oscillant des disques 2 déchaumeurs par rapport au châssis 1 porteur, en vue de permettre un escamotage indépendant de chaque disque 2 déchaumeur, chaque disque 2 est relié au châssis 1 par l'intermédiaire d'un organe de liaison, tel qu'un bras 8, monté à pivotement sur ledit châssis 1 autour d'un axe XX' sensiblement parallèle à l'axe de rotation du disque déchaumeur. Ce bras 8 coopére avec un élément de précontrainte 9, tel qu'un ressort de compression ou un vérin à circuit oléopneumatique ou hydraulique, porté par le châssis 1 de manière à n'autoriser le pivotement du bras 8 dans le sens d'un effacement du disque 2 par soulèvement que lorsque la pression exercée sur le disque devient supérieure à la pression de tarage dudit élément de précontrainte 9. Le retour à la position de travail s'effectue automatiquement sous la double sollicitation de la réaction de l'élément de précontrainte 9 et du poids du disque 2. Cette position de travail peut être marquée au moyen d'une butée mécanique montée sur le châssis 1 de manière à empêcher le retour du bras 8 et donc du disque 2 au-delà d'un terrage prédéterminé. Le réglage de la pression de tarage peut s'effectuer au moyen d'un écrou comprimant plus ou moins le ressort 9. C'est l'effort horizontal appliqué sur la tranche du disque qui va générer, en fonction de sa valeur, un déclenchement du système. Le principe bien connu est le suivant. Lorsque la pression exercée sur la tranche du disque devient supérieure à la pression de tarage du ressort 9, le disque 2 s'efface, se soulève par rotation du bras 8 autour de son axe de liaison au châssis 1. Une fois l'obstacle franchi, le poids du disque et la réaction du ressort assurent le réarmement du système et le terrage des pièces travaillantes. De nombreux dispositifs de ce type ont d'ores et déjà été utilisés sur des socs de charrue. Le ressort 9 de compression peut être du type ressort en volute, ressort à boudin, ressort à lame ou autres. Dans l'exemple représenté à la figure 5, le disque 2 passe de sa position de travail à une position escamotée d'une distance D lorsque la force F1 exercée sur le disque est supérieure à 40 kg et s'escamote au-delà de la distance D lorsque la force F2 est au moins égale à 80 kg.

Dans le cas d'utilisation d'un vérin hydraulique, la tige du vérin est reliée par une articulation au bras 8 pivotant. Le vérin est alimenté par un montage autonome dans lequel le circuit d'huile est fermé, mais en communication avec un accumulateur à gaz sous pression. Le volume de l'accumulateur est d'autant plus grand qu'il y a un nombre important de disques sur l'engin. Chaque corps possède son vérin branché sur le circuit oléopneumatique compressible dont la pression de tarage peut varier de 70 à 130 bars selon les indications du constructeur. Ainsi, un équilibre est établi entre les efforts supportables par la déchaumeuse en travail normal et la pression exercée dans le vérin en position d'extension. A la rencontre d'un obstacle, le disque subit un effort qui dépasse le niveau d'équilibre préréglé. Sous cette action brutale, il pivote vers l'arrière et provoque la rentrée de la tige du vérin. Celui-ci, par son piston, pousse l'huile qui appuie la membrane de l'accumulateur à gaz et comprime le gaz dans l'accumulateur constitué d'une cloche à membrane contenant de l'azote ou de l'ammoniac. Par réaction, la pression accumulée refoule immédiatement l'huile vers le vérin dont la tige sort et ramène automatiquement le disque dans sa position initiale. Bien évidemment, d'autres montages peuvent encore être imaginés pour permettre l'oscillation du disque et son effacement au-delà d'une valeur prédéterminée suivi d'un retour automatique en position de travail.

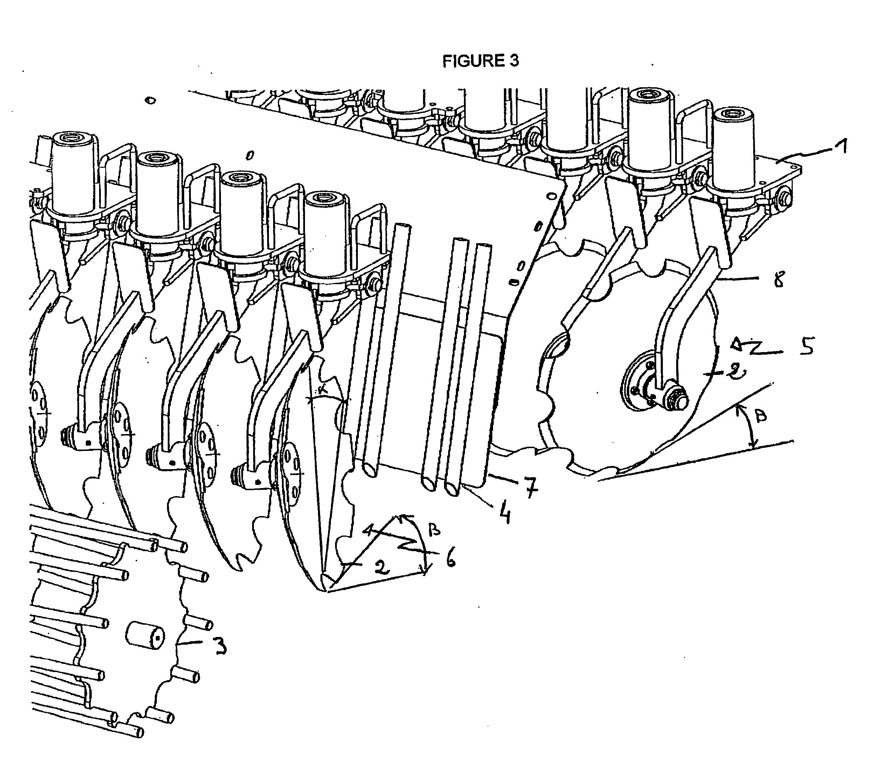

La déchaumeuse précitée comporte encore des éléments semeurs 4 disposés en aval du train 5 avant et en amont du train 6 arrière de disques 2 déchaumeurs de manière à obtenir un dépôt des graines sur le flux de terre projeté par le train 5 avant et un enfouissement des graines par la terre projetée par les disques du train 6 arrière. En effet, les disques 2 des trains avant et arrière, du fait de leur concavité, projettent un flux latéral et arrière de terre qui permet de créer un lit de terre et de recouvrir les graines semées au moyen des éléments semeurs 4. Grâce au montage oscillant et indépendant des disques déchaumeurs 2 sur le châssis 1 et à la présence de l'organe 3 de référence, le flux de terre projeté par chaque disque est toujours sensiblement identique du fait d'un positionnement précis en profondeur de chaque disque 2, de sorte que le niveau d'enfouissement des graines est toujours sensiblement le même, ces graines étant déposées sur une couche de terre compatible avec une croissance des graines. On obtient ainsi un semis à une profondeur déterminée constante sur une largeur de travail. Pour permettre un recouvrement parfait des graines, le bord d'attaque des disques 2 déchaumeurs du train 6 arrière est décalé latéralement par rapport à la sortie de l'élément semeur 4 comme le montre la figure 3.

Comme mentionné ci-dessus, la déchaumeuse comporte, pris dans le sens d'avancement du châssis, au moins deux trains 5, 6 successifs, sensiblement parallèles de disques déchaumeurs, les éléments semeurs 4 étant disposés entre lesdits trains 5, 6 de disques. Ces trains de disques sont appelés par convention train 5 avant de disques et train 6 arrière de disques, c'est à dire situés devant et derrière les éléments semeurs 4. Le train 6 arrière de disques a donc pour fonction, comme mentionné ci-dessus, de permettre l'enfouissement des graines semées par les éléments semeurs 4. A l'inverse, le train 5 avant de disques a pour fonction de mélanger la terre et les résidus et de niveler le sol pour préparer un lit de terre de réception des graines. Pour faciliter cette fonction de nivellement, la déchaumeuse comporte, entre le train 5 avant de disques 2 et les éléments semeurs 4, un élément déflecteur 7 conformé pour casser le flux de terre projeté par les disques 2 du train 5 avant et assurer ainsi un nivellement de la terre au sol. Cet élément déflecteur 7, qui peut être encore appelé tablier, affecte sensiblement la forme d'un garde-boue. Le profil de cet élément déflecteur est d'allure générale courbe. Le centre de l'arc de cercle, définissant la courbe de cet élément déflecteur 7, est commun et sensiblement identique au centre de l'arc de cercle du disque 2 déchaumeur du train avant. L'élément semeur 4, situé derrière ce déflecteur pris dans le sens d'avancement du châssis 1, peut être conformé de manière telle que l'extrémité de cet élément semeur 4 débouche dans le flux de terre projeté par le disque du train 5 avant ou au-dessus du flux de terre selon le niveau d'enterrage souhaité. Dans le cas de la première hypothèse, il sera tenu compte du flux de terre projeté par le disque avant pour le réglage de la position des disques du train 6 arrière de disques.

Dans une forme de réalisation préférée, les disques déchaumeurs 2 concaves présentent une concavité inversée d'un train de disques à un autre train de disques de telle sorte que, par exemple, les disques déchaumeurs du train avant 5 projettent un flux de terre latéralement à gauche et vers l'arrière tandis que le train arrière de disques projette un flux de terre latéralement à droite et vers l'arrière. Les éléments semeurs 4 interposés entre rangée avant de disques et rangée arrière de disques sont décalés axialement par rapport à la tranche des disques des trains avant et arrière pour ne pas se retrouver directement derrière ou devant la tranche d'un disque mais plutôt dans l'espace laissé libre entre deux disques à concavité inversée respectivement du train avant 5 et du train arrière 6. En conséquence, outre leur concavité inversée, les disques 2 des trains avant et arrière sont décalés axialement pris dans le sens d'avancement du châssis 1, ce désalignement autorisant un travail du sol parfait de l'emplacement où reposent la ou les graines déposées par l'élément semeur 4.

Grâce à une telle conception, on observe que le train avant de disques permet un mélange de la terre et des résidus et un nivellement du sol dans lequel vont être placées les graines à semer. Les disques 2 du train arrière 6 auront pour fonction de venir recouvrir ces graines en projetant un flux de terre de quantité prédéterminée du fait que la position en profondeur de ces disques 2 est parfaitement déterminée. On obtient ainsi un semis dont la profondeur d'enfouissement est généralement comprise entre 1 et 4 cm. Les éléments semeurs 4 ne seront pas décrits plus en détail ci-après. Les graines sont acheminées par des descentes, à partir d'un ou plusieurs organes de distribution, soit par gravité, soit par un transfert pneumatique.

## Revendications

1. Déchaumeuse de précision, du type comprenant un châssis (1) porté ou tracté équipé d'outils aratoires comprenant au moins un train (5) avant de disques (2) déchaumeurs rotatifs non moteurs, ces disques travaillant dans le sol suivant un terrage réglable par l'intermédiaire d'au moins un organe (3) de référence tel que patin, roue ou rouleau couplé audit châssis, chaque disque (2) déchaumeur ou le train (5) avant de disques (2) déchaumeurs étant monté indépendant et oscillant par rapport au châssis (1) porteur de la déchaumeuse de manière à céder sous une pression prédéterminée réglable et obtenir un travail de la terre à profondeur constante des disques (2) déchaumeurs, des éléments semeurs (4) ainsi qu'un dispositif d'enfouissement des graines distribuées par les éléments semeurs (4), ledit dispositif d'enfouissement étant monté sur le châssis (1) en aval desdits éléments semeurs (4),
**caractérisé en ce que** les éléments semeurs (4) sont disposés en aval du train (5) avant de disques (2) déchaumeurs concaves de telle manière que les graines soient disposées sur un lit de terre formé par le train avant de disques (2) déchaumeurs concaves et **en ce que** ledit dispositif d'enfouissement est constitué par un train (6) arrière de disques (2) déchaumeurs rotatifs non moteurs concaves, ces disques concaves travaillant dans le sol suivant un terrage réglable par l'intermédiaire dudit organe (3) de référence constitué d'un rouleau commun à au moins trois disques déchaumeurs, de préférence au moins cinq disques (2) déchaumeurs du train (5) avant ou respectivement du train (6) arrière de disques, chaque disque (2) déchaumeur ou le train (6) arrière de disques (2) déchaumeurs étant monté indépendant et oscillant par rapport au châssis (1) porteur de la déchaumeuse de manière à céder sous une pression prédéterminée réglable et obtenir un travail de la terre à profondeur constante des disques (2) déchaumeurs.

2. Déchaumeuse selon la revendication 1,
**caractérisée en ce que** chaque disque (2) déchaumeur du ou des trains(5, 6) de disques (2) est un disque concave de grand diamètre, le diamètre étant de préférence supérieur à 40 cm.

3. Déchaumeuse selon l'une des revendications 1 et 2,
**caractérisée en ce que** les disques (2) déchaumeurs sont constitués de disques concaves présentant une concavité inversée d'un train (5) de disques (2) à un autre train (6) de disques (2)

4. Déchaumeuse selon l'une des revendications 1 à 3,
**caractérisée en ce que** chaque disque (2) déchaumeur comporte un angle α d'entrure positif compris dans la plage 3 - 20 degrés et un angle β d'ouverture positif compris dans la plage 10 - 30 degrés.

5. Déchaumeuse selon l'une des revendications 1 à 4,
**caractérisée en ce que** chaque disque (2) déchaumeur est crénelé à sa périphérie.

6. Déchaumeuse selon l'une des revendications 1 à 5,
**caractérisée en ce qu'**elle comporte, entre le train (5) avant de disques (2) déchaumeurs et les éléments semeurs (4), un élément déflecteur (7) conformé pour casser le flux de terre projeté par les disques (2) du train (5) avant et assurer ainsi un nivellement de la terre au sol.

7. Déchaumeuse selon la revendication 6,
**caractérisée en ce que** le profil de l'élément déflecteur (7) est d'allure générale courbe, le centre de l'arc de cercle, définissant la courbe de cet élément déflecteur (7), étant commun et sensiblement identique au centre de l'arc de cercle du disque (2) déchaumeur.

8. Déchaumeuse selon l'une des revendications 1 à 7,
**caractérisée en ce que** chaque disque (2) déchaumeur est relié au châssis (1) par l'intermédiaire d'un organe (8) de liaison, tel qu'un bras (8), monté à pivotement sur ledit châssis (1) autour d'un axe (XX') sensiblement parallèle à l'axe de rotation du disque (2) déchaumeur, ledit bras (8) coopérant avec un élément de précontrainte (9), tel qu'un ressort de compression ou un vérin à circuit oléopneumatique ou hydraulique, de manière à n'autoriser le pivotement du bras (8) dans le sens d'un effacement du disque (2) par soulèvement que lorsque la pression exercée sur le disque (2) devient supérieure à la pression de tarage dudit élément de précontrainte (9), le retour à la position de travail s'effectuant automatiquement sous la double sollicitation de la réaction de l'élément de précontrainte (9) et du poids du disque (2).

## Patentansprüche

1. Präzisionsschälpflug, mit einem getragenen oder gezogenen Gestell (1), welches mit landwirtschaftlichen Werkzeugen mit mindestens einer vorderen Reihe (5) von nicht antreibenden Dreh-Schälpflugscheiben (2) ausgestattet ist, wobei diese Scheiben im Boden gemäß einer Einstellung der Arbeitstiefe arbeiten, welche über mindestens ein Referenzorgan (3, beispielsweise einen Schlitten, ein Rad oder eine Rolle, einstellbar ist, welches mit dem genannten Gestell gekoppelt ist, wobei jede Schälpflugscheibe (2) oder die vordere Reihe (5) von Schälpflugscheiben (2) unabhängig und schwingend in Bezug auf das Traggestell (1) des Schälpfluges derart montiert ist, dass sie unter einem vorgegebenen einstellbaren Druck nachgibt und eine Erdbodenbearbeitung bei konstanter Tiefe der Schälpflugscheiben (2), der Sähelemente (4) und einer Vorrichtung zum Unterpflügen der von den Sähelementen (4) gestreuten Samen erzielt wird, wobei die genante Vorrichtung zum Unterpflügen an dem Gestell (1) hinter den genannten Sähelementen (4) angeordnet ist,
**dadurch gekennzeichnet, dass** die Sähelemente (4) hinter der vorderen Reihe (5) von konkaven Schälpflugscheiben (2) derart angeordnet sind, dass die Samen auf eine Erdbettung gelegt werden, welche von der vorderen Reihe von konkaven Schälpflugscheiben (2) gebildet wird, und dass die genannte Vorrichtung zum Unterpflügen durch eine hintere Reihe (6) von konkaven, nicht antreibenden Dreh-Schälpflugscheiben (2) gebildet ist, wobei diese konkaven Scheiben im Boden gemäß einer Einstellung der Arbeitstiefe arbeiten, welche über das genannte Referenzorgan (3) einstellbar ist, das aus einer Rolle besteht, welche mindestens drei Schälpflugscheiben und bevorzugt mindestens fünf Schälpflugscheiben (2) der vorderen Scheibenreihe (5) bzw. der hinteren Scheibenreihe (6) gemeinsam ist, wobei jede Schälpflugscheibe (2) oder die hintere Reihe (6) von Schälpflugscheiben (2) unabhängig und schwingend in Bezug auf das Traggestell (1) des Schälpfluges derart angeordnet ist, dass sie einem vorgegebenen einstellbaren Druck nachgibt und eine Erdbodenbearbeitung bei konstanter Tiefe der Schälpflugscheiben (2) erzielt wird.

2. Schälpflug nach Anspruch 1, **dadurch gekennzeichnet, dass** jede Schälpflugscheibe (2) der Reihe oder der Reihen (5, 6) von Scheiben (2) eine konkave Scheibe großen Durchmessers ist, wobei der Durchmesser bevorzugt größer als 40 cm ist.

3. Schälpflug nach einem der Ansprüche 1 und 2, **dadurch gekennzeichnet, dass** die Schälpflugscheiben (2) aus konkaven Scheiben bestehen, welche von einer Reihe (5) von Scheiben (2) zu einer anderen Reihe (6) von Scheiben (2) eine umgekehrte Konkavität aufweisen.

4. Schälpflug nach einem der Ansprüche 1 bis 3, **dadurch gekennzeichnet, dass** jede Schälpflugscheibe (2) einen positiven Anstellwinkel α im Bereich 3 - 20 Grad und einen positiven Öffnungswinkel β im Bereich 10 - 30 Grad aufweist.

5. Schälpflug nach einem der Ansprüche 1 bis 4, **dadurch gekennzeichnet, dass** jede Schälpflugscheibe (2) auf ihrem Umfang ausgezackt ist.

6. Schälpflug nach einem der Ansprüche 1 bis 5, **dadurch gekennzeichnet, dass** er zwischen der vorderen Reihe (5) von Schälpflugscheiben (2) und den Sähelementen (4) ein Ablenkelement (7) aufweist, welches derart ausgestaltet ist, dass der von den Scheiben (2) der vorderen Reihe (5) geschleuderte Erdfluss gebrochen wird und **dadurch** eine Einebnung der Erde am Boden gewährleistet ist.

7. Schälpflug nach Anspruch 6, **dadurch gekennzeichnet, dass** das Profil des Ablenkelements (7) im wesentlichen gekrümmt verläuft, wobei das Zentrum des die Krümmung dieses Ablenkelementes (7) definierenden Kreisbogens mit dem Zentrum des Kreisbogens der Schälpflugscheibe (2) gemeinsam ist und mit diesem im wesentlichen übereinstimmt.

8. Schälpflug nach einem der Ansprüche 1 bis 7, **dadurch gekennzeichnet, dass** jede Schälpflugscheibe (2) mit dem Gestell (1) über ein Verbindungsorgan (8), beispielsweise einen Arm (8) verbunden ist, welches an dem genannten Gestell (1) schwenkbar um eine im wesentlichen parallel zu der Drehachse der Schälpflugscheibe (2) verlaufende Achse (XX') montiert ist, wobei der genannte Arm (8) mit einem Vorspannungselement (9), beispielsweise einer Kompressionsfeder oder einem Öl-Druckluft- oder hydraulischen Stellantrieb, derart zusammenwirkt, dass das Schwenken des Armes (8) in der Richtung einer Verdrängung der Scheibe (2) durch Anhebung nur dann zugelassen wird, wenn der auf die Scheibe (2) ausgeübte Druck den Abgleichdruck des genannten Vorspannungselements (9) übersteigt, wobei die Rückkehr zur Arbeitsstellung unter der doppelten Belastung durch die Reaktion des Vorspannungselements (9) und durch das Gewicht der Scheibe (2) automatisch erfolgt.

## Claims

1. Precision stubble removing machine, of the type including a carried or towed chassis (1), which is fitted with ploughing tools including at least one front train (5) of non-driving rotary stubble removing discs (2), these discs working in the ground according to a warping which is controllable through the intermediary of at least one reference means (3) such as a runner, wheel or roller connected to said chassis, each stubble removing disc (2) or the front train (5) of stubble removing discs (2) being mounted independently and oscillating relative to the bearing chassis (1) of the stubble removing machine so as to yield at a controllable predetermined pressure and to work the land at a constant depth of the stubble removing discs (2), sowing elements (4) as well as a device for burying seeds distributed by the sowing elements (4), said burying device being mounted on the chassis (1) downstream of said sowing elements (4), **characterised in that** the sowing elements (4) are disposed downstream of the front train (5) of concave stubble removing discs (2) in such a manner that the seeds are disposed on a bed of earth formed by the front train of concave stubble removing discs (2), and **in that** said burying device comprises a rear train (6) of concave non-driving rotary stubble removing discs (2), these concave discs working in the ground according to a warping which is controllable through the intermediary of said reference means (3) made up of a roller common to at least three stubble removing discs, preferably at least five stubble removing discs (2) of the front train (5) or respectively of the rear train (6) of discs, each stubble removing disc (2) or the rear train (6) of stubble removing discs (2) being mounted independently and oscillating relative to the bearing chassis (1) of the stubble removing machine so as to yield at a controllable predetermined pressure and to work the land at a constant depth of the stubble removing discs (2).

2. Stubble removing machine according to claim 1, **characterised in that** each stubble removing disc (2) of the train or trains (5, 6) of discs (2) is a concave disc of large diameter, the diameter preferably being greater than 40 cm.

3. Stubble removing machine according to one of claims 1 and 2, **characterised in that** the stubble removing discs (2) are formed by concave discs having an inverted concavity for one train (5) of discs (2) when compared with another train (6) of discs (2).

4. Stubble removing machine according to one of claims 1 to 3, **characterised in that** each stubble removing disc (2) has a positive entry angle α within the range of 3 - 20 degrees and a positive opening angle β within the range of 10 - 30 degrees.

5. Stubble removing machine according to one of claims 1 to 4, **characterised in that** each stubble removing disc (2) is crenellated along its periphery.

6. Stubble removing machine according to one of claims 1 to 5, **characterised in that** it has, between the front train (5) of stubble removing discs (2) and the sowing elements (4), a deflecting element (7) shaped to break-up the flow of earth projected by the discs (2) of the front train (5) and thereby to ensure a levelling of the earth relative to the ground.

7. Stubble removing machine according to claim 6, **characterised in that** the profile of the deflecting element (7) is of a general curved configuration, the centre of the arc of the circle, which defines the curvature of this deflecting element (7), being common with and substantially identical to the centre of the arc of the circle of the stubble removing disc (2).

8. Stubble removing machine according to one of claims 1 to 7, **characterised in that** each stubble removing disc (2) is connected to the chassis (1) through the intermediary of a connection means (8), such as an arm (8), pivotally mounted on said chassis (1) about an axis (XX') substantially parallel to the axis of rotation of the stubble removing disc (2), said arm (8) cooperating with an initially tensioned element (9), such as a compression spring or a jack with an oil and air circuit or a hydraulic jack, so as to permit the pivoting of the arm (8), in the sense of a retraction of the disc (2) by a raising effect, only when the pressure exerted on the disc (2) becomes greater than the adjustment pressure of said initially tensioned element (9), the return to the working position being effected automatically by the double application of the reaction of the initially tensioned element (9) and the weight of the disc (2).
